(19)

Europäisches
Patentamt
European
Patent Office
Office européen
des brevets

(11) EP 2 565 601 B1

(12) **EUROPEAN PATENT SPECIFICATION**

(45) Date of publication and mention
of the grant of the patent:
**30.11.2016 Bulletin 2016/48**

(51) Int Cl.:
***G01H 3/14*** *(2006.01)* ***G01S 3/808*** *(2006.01)*

(21) Application number: **12182786.9**

(22) Date of filing: **03.09.2012**

(54) **Noise measuring equipment and method of measuring noise**

Rauschmessausrüstung und Verfahren zum Messen von Rauschen

Équipement de mesure de bruit et procédé de mesure de bruit

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2011 JP 2011192116**

(43) Date of publication of application:
**06.03.2013 Bulletin 2013/10**

(73) Proprietor: **Rion Co., Ltd.
Tokyo 185-8533 (JP)**

(72) Inventors:
• **Sakoda, Keishi
Kokubunji-shi, Tokyo, 185-8533 (JP)**
• **Shinohara, Kenji
Kokubunji-shi, Tokyo, 185-8533 (JP)**

(74) Representative: **Isarpatent
Patent- und Rechtsanwälte Behnisch Barth
Charles
Hassa Peckmann & Partner mbB
Postfach 44 01 51
80750 München (DE)**

(56) References cited:
**WO-A1-2012/127850     JP-A- H09 105 667**

• **REIN C MUCHALL: "Experiences with and
intelligent measurement system for monitoring
aircraft noise without radar assistance", THE
2001 INTERNATIONAL CONGRESS AND
EXHIBITION ON NOISE CONTROL
ENGINEERING, 27 August 2001 (2001-08-27),
pages 1-4, XP055066932,**
• **GUEN NISHINOMIYA ET AL: "Aircraft Noise
Identification System By Correlation Technique",
IEEE TRANSACTIONS ON BROADCASTING,
IEEE SERVICE CENTER, PISCATAWAY, NJ, US,
vol. BC-10, no. 4, 1 December 1978 (1978-12-01),
pages 116-120, XP011148392, ISSN: 0018-9316**
• **ICHIRO YAMADA ET AL: "Acoustic recognition
of aircraft types in flight", JOURNAL OF THE
ACOUSTICAL SOCIETY OF JAPAN, vol. 6, no. 3,
1 January 1985 (1985-01-01) , pages 203-213,
XP055066944,**
• **GENESCA M ET AL: "Real time aircraft fly-over
noise discrimination", JOURNAL OF SOUND &
VIBRATION, LONDON, GB, vol. 323, no. 1-2, 5
June 2009 (2009-06-05), pages 112-129,
XP026043374, ISSN: 0022-460X, DOI:
10.1016/J.JSV.2008.12.030 [retrieved on
2009-02-20]**

## Description

### Technical Field

The present invention relates to a noise monitoring apparatus and a noise monitoring method which are suitable for use in an environment where a flyover noise of an aircraft and a ground noise are mixed in a monitoring target area.

### Background Art

Conventionally, for example, there is known a prior art effective for automatically discriminating a flyover noise of an aircraft, which is monitored under a flight route of an aircraft or the like (see, for example, Japanese Patent Application Laid-open No. H7-43203). This prior art calculates an elevation angle and an angle of direction of a sound source by using a flyover noise discrimination technique by correlation method, and turn them into an arrival direction vector of the moving sound source for automatically discriminating the movement trajectory of the moving sound source from an obtained set of vectors.

Further in the prior art, like in the conference article of R.C.Muchall, "Experiences with and intelligent measurement system for monitoring aircraft noise without radar assistance", from Internoise 2001, the detection of presence of a source is triggered by the exceeding of a sound level threshold.

The discrimination technique of the prior art enables that, even at a monitoring site (monitoring site) which is influenced by a noise of an aircraft taking off or landing on an airport, the influence of the noise of the aircraft taking off or landing is each discriminated and comprehended accurately, so as to discriminate a movement course of the aircraft on a unit sphere surface with high accuracy.

Monitoring of noise which occurs accompanying operation of an aircraft or the like is only necessary hitherto to monitor a flyover noise such as a noise from the flyover, a taking-off runway noise occurring on a runway, and a reverse noise during landing, but currently (from now on), it is necessary to monitor a ground noise of an aircraft which occurs accompanying operation of the aircraft in an airport, maintenance of an aircraft body, and so on in the periphery of the airport.

As the types of aircraft noise, two types are defined: "single event noise" and "semi-stationary noise". It is possible that the ground noise is detected either as the single event noise or the semi-stationary noise. Here, the "single event noise" is a transient noise which occurs singly, and is a noise monitored in the periphery of an airport accompanying operation of an aircraft.

Further, the "semi-stationary noise" is a noise measured for a long time, which is steady but accompanies a considerable level fluctuation. The semi-stationary noise corresponds to, for example, a noise which occurs accompanying engine run-up operations, APU (auxiliary power unit) operation, taxiing, or the like monitored in the periphery of an airport accompanying maintenance of an aircraft, or the like. On the other hand, the types of aircraft noise sources which occur on the ground include, for example, noises which occur accompanying reverse, run-up, taxiing, APU operation, engine run-up operations, and so on.

Under such a situation, when automatic monitoring of the ground noise in the periphery of an airport is performed, it is difficult to separate (discriminate) the types of the ground noise only with the pattern of fluctuation of A-weighted sound pressure level (fluctuation amount of noise) from characteristics of the noise source.

This is because as the characteristics of the noise source, there are a noise measured for a long time (semi-stationary noise) and a noise which occurs singly (single event noise), or a noise in which such noises occur in an overlapped manner, and the like, and various types of noises are mixed in the noise source while changing at every moment.

Accordingly, when a noise is evaluated according to a prescribed manual (aircraft noise measurement/evaluation manual), a period from the start to the end of airport operation can become a single semi-stationary noise event. However, in this one semi-stationary noise event, a variety of sound sources due to taking off, landing, taxiing, towing car, freight car, and so on are included.

Therefore, it is necessary to separate the single long semi-stationary noise event by time for every sound source and discriminate whether each of them is a noise due to taking off or a noise due to taxiing. Then, previously, event detection from every noise source is determined visually by a worker based on the noise level and the sound arrival direction. Accordingly, a lot of time has been necessary for detection processing from every noise source, and proficiency of the worker has been required.

### Disclosure of the Invention

One object of the present invention is to provide a technology capable of discriminating noises accurately and quickly even when they are different types of aircraft noises.

To solve the above-described problems, according to one aspect of the present invention, there is provided a noise monitoring apparatus according to independent claims 1 and a noise monitoring method according to independent claim 3 used in an environment where a transient single event noise which occurs at least singly and a semi-stationary noise which occurs continuously in a quasi-steady manner are mixed.

According to the noise monitoring apparatus and the noise monitoring method of the present invention, the characteristic amount indicating a change in arrival direction of sound in synchronization with fluctuation of a noise level is calculated, and a sound source boundary is extracted automatically from a long aircraft noise for several hours. Thus, the detected noise can be divided into aircraft noises by sound source. Therefore, for example, while a ground noise generated by an aircraft is monitored constantly, an aircraft noise of different type can be extracted therefrom.

Note that when the single event noise and the semi-stationary noise overlap (occur around the same time), the single event noise is larger in sound level, and thus it is difficult to identify the semi-stationary noise in a prior and posterior section of the single event noise. Accordingly, in the present invention, the prior and posterior section of the single event noise can be defined as an exclusion section from the beginning.

Further, when the arrival direction of a noise switches frequently in a short period, it is difficult to determine whether it is single event noise or semi-stationary noise, or any other noise. Accordingly, in the present invention, when the arrival direction of a noise switches frequently in a short period, that is, a candidate point closer than a predetermined time can be excluded from the candidate points in advance. Thus, a candidate point due to the influence of noise or the like can be excluded from the candidate points.

In another aspect of the noise monitoring apparatus and the noise monitoring method of the present invention, it is preferred to calculate, as the characteristic amount, at least one of an arrival direction movement amount indicating a change amount in the arrival direction of the noise, an elevation angle standard deviation related to an elevation angle from a horizontal plane set in a monitoring space with reference to a predetermined monitoring site, and an angle of direction standard deviation related to an angle of direction relative to a reference azimuth set in the monitoring space with reference to the predetermined monitoring site.

According to the above aspect, by calculating the characteristic amount using the arrival direction movement amount, the elevation angle standard deviation, and the angle of direction standard deviation which are elements for discriminating a noise, different types of aircraft noises can be discriminated more accurately.

As still another aspect of the noise monitoring apparatus and the noise monitoring method of the present invention as defined in dependent claims 2 and 4, respectively, when the single event noise exists between the candidate points, candidate points on both sides of the single event noise are determined as the semi-stationary noise from a same sound source if a correlation of histograms of angles of direction of the candidate points on the both sides sandwiching the single event noise satisfies a certain criterion. Here, the phrase "if a correlation of histograms of angles of direction satisfies a certain criterion" describes that the correlation of the histograms of the angles of direction are high, and means the case where, for example, there are many overlaps of the histograms of the angles of direction, or the like. In the present invention, when a single event noise is sandwiched between sections sectioned by candidate points, if the correlation of the sections on the both sides satisfies a certain criterion, they are determined as the same semi-stationary noises. Accordingly, when the single event noise occurs, by recognizing the prior and posterior relation of the section in which the single event noise occurs, it is possible to determine as a section of the semi-stationary noise from the same sound source or determine as a section of the semi-stationary noise from a different sound source.

The information related to the elevation angle in measurement of ground noise has almost no characteristic other than the single event noise due to taking off, landing, or the like. On the other hand, the information related to the angle of direction is information coming from various directions on a horizontal plane, and thus characteristics appear according to the location of a sound source from an aircraft which is moving or stopped.

Thus, according to the above aspect, when the correlation of the histograms of the angles of direction of the candidate points satisfies a certain criterion (when the correlation of the histograms of the angles of direction is high), they are determined as the semi-stationary noises from the same sound source, and hence reliability of determination of semi-stationary noises can be improved.

**Effects of the Invention**

According to a noise monitoring apparatus and a noise monitoring method of the present invention, aircraft noises of different types can be discriminated accurately and quickly even in a target area where noises from the ground occur in a complicated manner.

**Brief Description of Drawings**

EP 2 565 601 B1

Fig. 1 is a schematic diagram illustrating one embodiment of the case where a noise monitoring apparatus is installed in an airport;

Fig. 2 is a diagram schematically illustrating a structure of the noise monitoring apparatus and a flyover noise discrimination technique by a correlation method;

Fig. 3 is a diagram explaining a noise event detecting method for a single event noise together with a temporal change of noise level under a flight route;

Fig. 4 is a diagram explaining the noise event detecting method for a semi-stationary noise together with a temporal change of noise level in the airport;

Fig. 5 is a flowchart illustrating a procedure example of noise measurement processing executed by a monitoring unit of the noise monitoring apparatus;

Fig. 6 is a diagram schematically illustrating the relation between a sound source position and vector data plotted on the unit sphere surface;

Fig. 7 is a diagram explaining a calculation range of a standard deviation;

Figs. 8 are diagrams schematically illustrating the contents of first candidate point exclusion processing;

Fig. 9 is a diagram schematically illustrating the contents of the second candidate point exclusion processing;

Fig. 10 is a diagram explaining a calculation section for a semi-stationary noise with a single event noise being sandwiched therebetween;

Fig. 11 is a diagram illustrating an example of a histogram of an angle of direction;

Fig. 12 is a diagram schematically illustrating the specific processing contents of section determination processing of a semi-stationary noise;

Fig. 13 is a diagram schematically illustrating the contents of exception handling of the section determination processing of a semi-stationary noise;

Figs. 14 are diagrams illustrating various data at a ground noise monitoring site, which are measured in the periphery of an airport; and

Figs. 15 are diagrams illustrating an example of fluctuation of semi-stationary noise level and characteristic amounts obtained by performing separation processing.

## Detailed Description

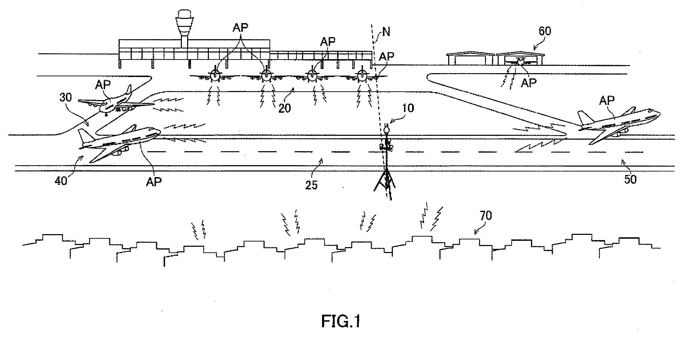

Fig. 1 is a schematic diagram illustrating one embodiment of the case where a noise monitoring apparatus is installed in an airport. In a target area such as an airport (or a surrounding area thereof), there is formed a noise environment in which, besides a noise coming from the flyover accompanying flight of an aircraft, and a takeoff and landing running noise and a reverse noise at the time of landing which occur on a runway (hereinafter referred to as a "flyover noise"), a noise accompanying operation of an aircraft and maintenance of an aircraft body and a noise accompanying taxiing, engine run-up operations, operation of an APU, and so on in the airport (hereinafter referred to as a "ground noise") are mixed.

As illustrated in Fig. 1, the noise monitoring apparatus can be used in a state that a microphone unit 10 is disposed at a monitoring site in the airport. Further, a not-illustrated monitoring unit is connected to the microphone unit 10.

In the airport as the target area, areas to be noise sources exist at various locations such as, for example, a landing aircraft 40 or a taking-off aircraft 50 running on an apron 20, a taxiway 30, or a runway 25, and an engine run-up operations area 60. In the airport, various noises occur from these locations, and come from their respective directions to the monitoring site. The noise monitoring apparatus of this embodiment can automatically detect the noise coming to the monitoring site by using the microphone unit 10. The areas to be noise sources will be described by location below.

[APU]

From the apron 20, a noise accompanying operation of an auxiliary power unit (APU) occurs. Note that the auxiliary power unit is a small engine used as a power source supplying compressed air, hydraulic pressure, electric power, and/or the like to an aircraft AP being parked.

[Taxiing]

The taxiway 30 is a path on which the aircraft AP moves between the apron 20 and the runway 25. In the aircraft AP which is taxiing, an engine is operating so as to obtain driving power needed for a ground run, which generates a noise.

[Landing Noise]

The landing aircraft 40 generates a noise accompanying operation of the aircraft AP through descending toward and landing on the runway 25 upon arrival, further performing reversing of the engine on the runway 25 in many cases for decelerating, and finally exiting the runway 25.

[Take-off noise]

The taking-off aircraft 50 generates a noise accompanying operation of the aircraft AP through starting to glide at a starting end of the runway 25 at the time of departure, lifting and ascending in middle of the runway 25, and flying away.

[Engine Run-up Operations]

Further, in the engine run-up operations area 60, a noise occurs accompanying test driving for confirming operation of the engine (main engine) of the aircraft AP.
Note that although not illustrated in Fig. 1, besides the above noise, the following noise occurs in the airport.

[Touch and Go]

For the purpose of a takeoff and landing training or the like, when the aircraft AP is in, for example, a flight mode to enter the runway 25, land, decelerate, and thereafter increase the engine output to take off again (touch and go), a noise accompanying this series of operation occurs.

[Hovering]

When a helicopter is in a flight mode to hover substantially statically, a noise occurs accompanying this.

[Urban Area]

Besides the above, when there is an urban area 70 for example in surroundings of the airport, other noises from the ground occur accompanying various social activities in the urban area 70 (operation of transportation facilities, road traffics, civil lives, and so on).

[Positional Relation with the Monitoring Site]

The microphone unit 10 is installed as a monitoring site at one position (which may be plural positions) in the airport, for example. When the north (N) is defined with reference to this monitoring site, the apron 20 is located, for example, from the north-northwest (NNW) to the northwest (NW). Further, the taxiway 30 is located from the northwest (NW) to the west-northwest (WNW), and the runway 25 is located, for example, from the west-northwest (WNW) to the east-northeast (ENE). Further, the engine run-up operations area 60 is located in the northeast (NE), for example. Note that the arrangement location of the microphone unit 10 can be, for example, in the periphery of the runway 25, but can also be on the rooftop of the engine run-up operations area 60, for example.

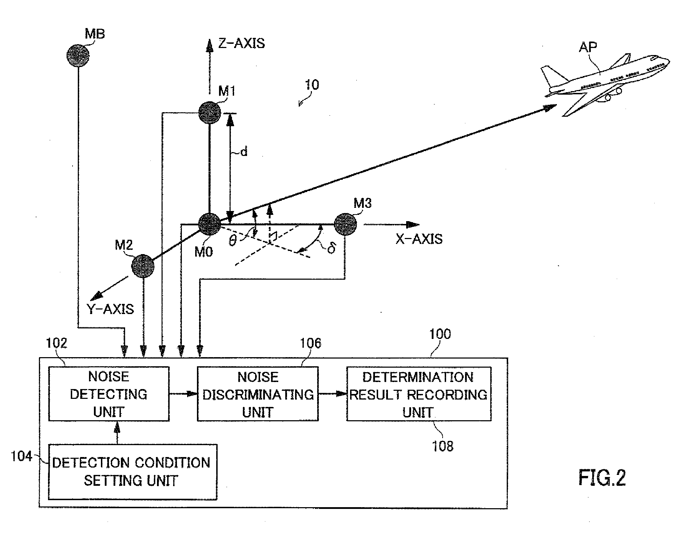

Fig. 2 is a diagram schematically illustrating a structure of the noise monitoring apparatus and a flyover noise discrimination technique by a correlation method. The noise monitoring apparatus has a function to perform calculation processing using the microphone unit 10, and discriminating a flyover noise by the correlation method.

[Microphone Unit]

The microphone unit 10 is structured to include four microphones M0, M1, M2, M3 for example, and the individual microphones M0 to M3 are disposed on an X-axis, a Y-axis, and at a Z-axis and the origin of three-axis coordinates which are defined virtually. Specifically, the microphone M0 is disposed at the origin, and another microphone M1 is disposed on the Z-axis extending in a vertical direction from the origin. Further, another microphone M2 is disposed on the Y-axis extending in a horizontal direction from the origin and forming a 90° angle with the X-axis, and another microphone M3 is disposed on the X-axis extending in a horizontal direction from the origin. The microphone unit 10 fixes the individual microphones M0 to M3 mechanically, and maintains the relative positional relation (three-axis correlation) of the microphones M0 to M3 in its installed state.
Besides them, the microphone unit 10 includes another microphone MB different from the above-described four microphones M0 to M3. While the four microphones M0 to M3 are for discriminating the flyover noise by the correlation method, the microphone MB is for monitoring a noise. The microphone MB is used solely for monitoring a noise level at the monitoring site, for example.

[Monitoring Unit]

The noise monitoring apparatus includes a monitoring unit 100, and the microphone unit 10 is connected to this monitoring unit 100. The monitoring unit 100 is formed of a computer apparatus including, for example, a central processing unit (CPU), a semiconductor memory (ROM, RAM), a hard disk drive (HDD), an input/output interface, a liquid crystal display, and so on, which are not illustrated.

[Flight Sound Discrimination Technique by Correlation Method]

Next, the flyover noise discrimination technique by the correlation method using the four microphones M0 to M3 will be described. Note that the flyover noise discrimination technique by the correlation method is publicly known already, and thus an overview thereof will be described here.
For example, when the two microphones M1, M0 are disposed vertically on the vertical line (Z-axis), the interval therebetween is represented by d(m). Then, when a sound of the flying aircraft AP enters at an elevation angle $\theta$, a time difference $\tau$(s) for this sound to reach the two microphones M1, M0 is represented by the following equation (1) with the sonic velocity being c (m/s).

$$\tau = d/c \cdot \sin(\theta) \quad \dots \quad (1)$$

Then, with the above equation (1), the elevation angle $\theta$ of the sound source seen from the monitoring site can be obtained.
When it is conceivable that the arrival direction of the sound is sufficiently higher on the flyover side ($\theta > 0$), information of this elevation angle $\theta$ can be used for discriminating a flyover noise (see Patent Document 1 cited in the Prior Art). That is, for example, when the noise level detected by the microphone MB exceeds a certain threshold (a noise event occurs), simultaneous recording of elevation angle changes $\theta(t)$ at every moment as noise arrival direction data enables to determine a noise of sound arrival direction data larger than a pre-specified elevation angle as a flyover noise caused by the aircraft AP.

[Calculation of Arrival Direction Vector]

Further, when the arrival direction of sound is spread not only in the vertical direction but in a correlation between the three axes, the X-Y axis, the Y-Z axis, and the Z-X axis with each other, it is possible to obtain by calculation an angle of direction $\delta$ in addition to the elevation angle $\theta$. Then, by obtaining these elevation angle $\theta$ and angle of direction $\delta$, an arrival direction vector (unit vector) of a noise within the three-axis measurement space (vector space) with reference to the monitoring site can be calculated. Further, with an outer product of the calculated arrival direction vector, it is possible to know the movement direction (from which direction to which direction it proceeded) of the sound source (aircraft AP) more reliably with reference to the monitoring site.

[Structure as the Noise Monitoring Apparatus]

The monitoring unit 100 has, as its functional elements, a noise detecting unit 102, a detection condition setting unit 104, a noise discriminating unit 106, and a determination result recording unit 108.
Among them, the noise detecting unit 102 detects an A-weighted sound pressure level on the ground occurring in a target area based on, for example, noise detection signals from the microphones MB, M0 to M3, or the like. Specifically, the result of digitally converting a noise detection signal is sampled, and an A-weighted sound pressure level value (dB) at the monitoring site is calculated.
In the detection condition setting unit 104, the condition (threshold level) for detecting a noise event of single event noise or semi-stationary noise from the A-weighted sound pressure level value is registered. The noise detecting unit 102 can subject the calculated A-weighted sound pressure level value (dB) to the condition read from the detection condition setting unit 104 so as to detect an event of flyover noise or ground noise of single event noise, or detect a ground noise event of semi-stationary noise. Note that an example of detecting the noise event will be described in more detail later.
The noise discriminating unit 106 calculates an arrival direction vector (elevation angle $\theta$, angle of direction $\delta$) of a sound by the above-described three-axis correlation method based on detection signals from the four microphones M0 to M3. Then, among data resulted from dispersing and sampling on the temporal axis the maximum value of moving average of a standard deviation of each of the arrival direction vector elevation angle $\theta$ and the angle of direction $\delta$ of

the sound and the arrival direction of the sound, the noise discriminating unit 106 uses the maximum value of an arrival direction movement amount which is a straight distance on the unit sphere surface of temporally adjacent values (positions in a three-dimensional space) to detect the timing of switching of a main sound source, and separates the most dominant sound source by temporal axis to thereby monitor the aircraft noise. Note that the processing contents of the noise discriminating unit 106 will be described in more detail later.

The determination result recording unit 108 records the result of monitoring (result of determination) by the noise discriminating unit 106, and outputs the recorded contents in response to a request from the outside.

[Noise Event Detection Method]

Next, a method for detecting a noise event will be described.

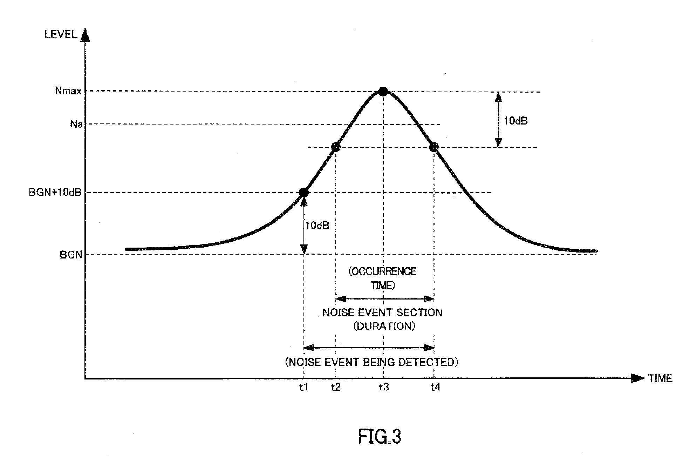

Fig. 3 is a diagram explaining the noise event detecting method for a single event noise together with a temporal change of A-weighted sound pressure level under a flight route. The monitoring unit 100 detects, for example, an A-weighted sound pressure level sequentially in the noise detecting unit 102 to thereby calculate a background noise level (BGN) at the monitoring site.

The single event noise occurs as a transient noise by passing of the aircraft AP through the above flyover, or the like as described above. Therefore, regarding the temporal change of a single event noise level, the A-weighted sound pressure level increases as the time passes, and increases to the level higher by 10 dB than the background noise level at time t1. Thereafter, the A-weighted sound pressure level reaches the maximum value (Nmax), and then becomes the background noise level (BGN) again.

In this case, the monitoring unit 100 starts to detect a noise event from time t1 in the noise detecting unit 102. That is, when the A-weighted sound pressure level of the microphone MB increases to the level higher by 10 dB than the background noise level (BGN), detection processing of the noise event is started.

In the detection condition setting unit 104, a threshold level (Na) for determining that the single event noise has occurred is set in advance. Therefore, the noise detecting unit 102 discriminates the single event noise only when the measurement value exceeds the threshold level (Na). In this example, the measurement value actually exceeds the threshold level (Na), and thus the noise detecting unit 102 can determine time t3 at which the A-weighted sound pressure level reaches the maximum value (Nmax) as the occurrence time of the single event noise.

Further, at this time, the noise detecting unit 102 determines time t4 at which the A-weighted sound pressure level decreases 10 dB from the maximum value (Nmax) as the end time of the single event noise. As a result, the period from time t1 (start time) to time t4 (end time) is a period in which the noise event is being detected (detection processing).

Then, the noise detecting unit 102 cuts out a period in which the A-weighted sound pressure level is at a level higher than a value decreased by 10 dB from the maximum value (Nmax), and determines this as a noise event period. The noise event period is assumed as a time in which the single event noise continued at the monitoring site.

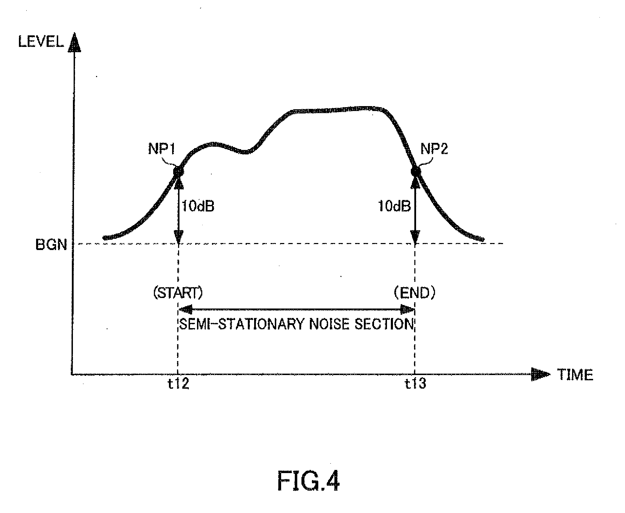

Next, Fig. 4 is a diagram explaining the noise event detecting method for a semi-stationary noise together with a temporal change of A-weighted sound pressure level in the airport (or vicinity). Also here, the monitoring unit 100 detects the A-weighted sound pressure level sequentially in the noise detecting unit 102 to thereby calculate a background noise level (BGN) at the monitoring site.

[Detection of Semi-Stationary Noise]

The case where the semi-stationary noise by the aircraft AP occurs in the airport is assumed. Before certain time t12, the measurement value at the monitoring site increases to the level (NP1) higher by 10 dB than the background noise level (BGN) by moving on the taxiway 30 or the like, for example. Thereafter, the noise further increases, and the A-weighted sound pressure level undergoes a transition while retaining the high level in a quasi-steady manner for a long time to some extent, decreases to the level (NP2) higher by 10 dB than the background noise level (BGN), and then becomes the background noise level (BGN) again.

In this case, the monitoring unit 100 starts to detect a noise event from time t12 in the noise detecting unit 102. That is, also here, when the noise level increases to the level (NP1) higher by 10 dB than the background noise level (BGN), the detection processing of the noise event is started. However, the threshold level is not set in the case of the semi-stationary noise.

Then, the noise detecting unit 102 cuts out a period in which the measurement value is at the level higher by 10 dB than the background noise level (BGN), and determines this as a noise event period. The noise event section in this case is assumed as a time in which the semi-stationary noise continued when it continued for a long time to some extent at the monitoring site.

[Noise Measurement Processing]

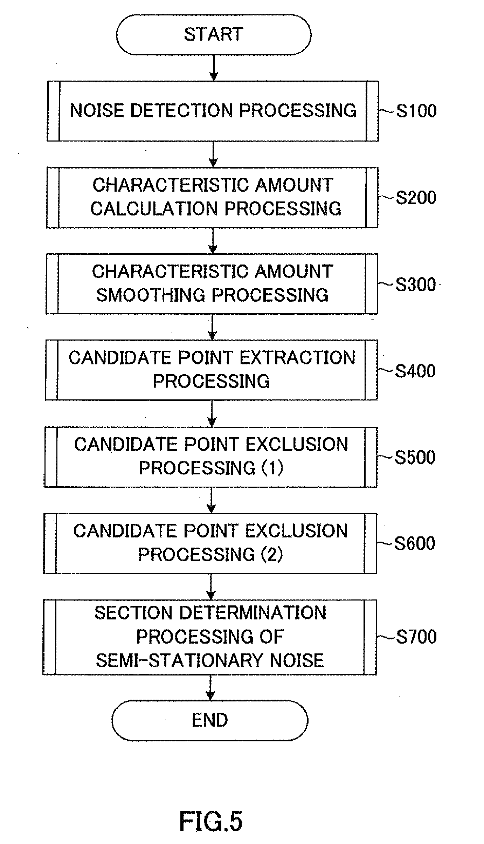

Fig. 5 is a flowchart illustrating a procedure example of noise measurement processing executed by the monitoring unit 100 of the noise monitoring apparatus. Further, in the following explanation, the contents of respective steps used in the noise monitoring method will be clear. Note that details of processing other than the noise detection processing will be described later, and an overview of the respective steps will be described here.

[Noise Detection Processing (Detection Processing)]

Step S100: the monitoring unit 100 executes noise detection processing using the noise detecting unit 102. The noise detection processing is to detect at least noises including a single event noise and a semi-stationary noise. Specifically, the A-weighted sound pressure levels of the microphone MB and the microphones M0 to M3 are detected, and the detected A-weighted sound pressure level data and time for a predetermined time are stored in the semiconductor memory.

The stored A-weighted sound pressure level is subjected to the detection condition read from the detection condition setting unit 104, and it is determined whether or not the noise level satisfies the detection condition of the noise event. When the monitoring unit 100 has discriminated the single event noise or the semi-stationary noise, the monitoring unit 100 executes next step S200.

[Characteristic Amount Calculation Processing (Characteristic Amount Calculating Step)]

Step S200: the noise discriminating unit 106 of the monitoring unit 100 executes characteristic amount calculation processing. The characteristic amount calculation processing is to calculate the characteristic amount indicating a change in the arrival direction of the noise detected by the noise detection processing in step S100. By calculating the characteristic amount, which direction the noise comes from can be recognized, and the sound source of the noise can be determined.

[Characteristic Amount Smoothing Processing (Smoothing Step)]

Step S300: the noise discriminating unit 106 of the monitoring unit 100 executes characteristic amount smoothing processing. The characteristic amount smoothing processing can calculate a moving average value with a time width set in advance among characteristic amounts calculated in the characteristic amount calculation processing of step S200.

[Candidate Point Extraction Processing (Extracting Step)]

Step S400: the noise discriminating unit 106 of the monitoring unit 100 executes candidate point extraction processing. The candidate point extraction processing is to extract a candidate point based on the amount a characteristic amount has fluctuated among the characteristic amounts smoothed by the characteristic amount smoothing processing of step S300. When the characteristic amount fluctuates, it can be seen that the arrival direction of the noise is changing. Thus, the noise discriminating unit 106 can extract this time point as the candidate point.

[First Candidate Point Exclusion Processing (Excluding Step)]

Step S500: the noise discriminating unit 106 of the monitoring unit 100 executes first candidate point exclusion processing. The first candidate point exclusion processing is to exclude a candidate point which satisfies an exclusion condition set in advance from among the candidate points extracted in the extraction processing of step S400. Specifically, the noise discriminating unit 106 executes processing to exclude from the candidate points a candidate point existing in a certain prior and posterior section with reference to the section of the single event noise as one which satisfies the exclusion condition.

[Second Candidate Point Exclusion Processing (Excluding Step)]

Step S600: the noise discriminating unit 106 of the monitoring unit 100 executes second candidate point exclusion processing. The second candidate point exclusion processing is to exclude a candidate point which satisfies an exclusion condition set in advance from among the candidate points extracted in the extraction processing of step S400. Specifically, the noise discriminating unit 106 executes processing to exclude from the candidate points a candidate point which is closer than a predetermined time (candidate point which is excessively close) as one which satisfies the exclusion condition.

[Section Determination Processing of Semi-Stationary Noise (Determining step)]

Step S700: the noise discriminating unit 106 of the monitoring unit 100 executes section determination processing of the semi-stationary noise. The section determination processing of the semi-stationary noise determines, when the single event noise exists between the candidate points in sections sectioned by candidate points which are extracted by the extraction processing of step S400 and are not excluded by the two exclusion processings of step S500 and step S600, candidate points on both sides of the single event noise as the semi-stationary noise from a same sound source if a correlation of histograms of angles of direction of the candidate points on the both sides sandwiching the single event noise satisfies a certain criterion. Accordingly, when the single event noise occurs, by recognizing the prior and posterior relation of the section in which the single event noise occurs, it is possible to determine as a section of the semi-stationary noise from the same sound source or determine as a section of the semi-stationary noise from a different sound source.

[Details of Characteristic Amount Calculation Processing]

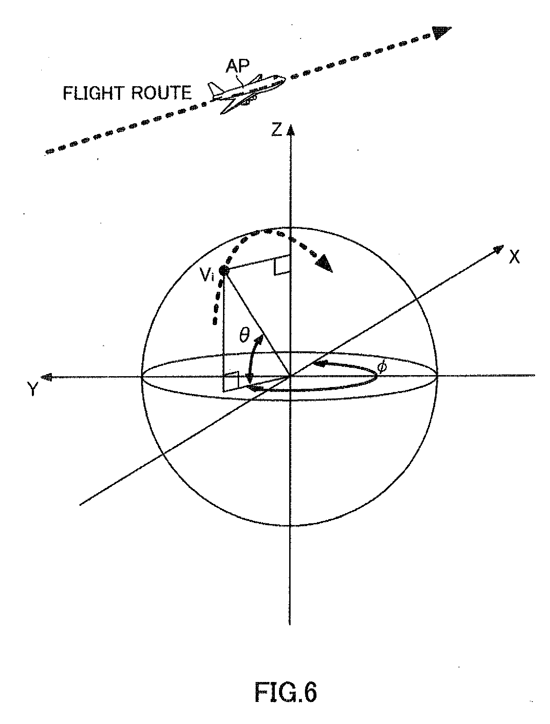

Fig. 6 is a diagram schematically illustrating the relation between a sound source position and vector data plotted on the unit sphere surface.
In the characteristic amount calculation processing (see step S200 in Fig. 5), characteristic amounts which mean a change in arrival direction of a sound per unit time are calculated. The characteristic amounts used in this embodiment include three characteristic amounts: "arrival direction movement amount", "angle of direction standard deviation", and "elevation angle standard deviation".

[Arrival Direction Movement Amount]

The arrival direction movement amount which is the first characteristic amount is a straight distance on the unit sphere surface of temporally adjacent values (positions in a three-dimensional space) among data sampled by dispersing the arrival direction of a sound on a temporal axis.
A sound source position and vector data (arrival direction of a sound) $V_i$ are, as illustrated in Fig. 6, a series of dots at which a straight line coupling the sound source such as the aircraft AP and the microphone position (center position of the virtual sphere) crosses the unit sphere surface, and can be represented by the following equation (1).

$$V_i = (\theta_i, \phi_i) \quad \dots (1)$$

Here,

$i$: time index,
$\theta$: elevation angle,
$\phi$: angle of direction.

Then, a conversion formula from a local coordinate system to an orthogonal coordinate system of the vector data can be represented by the following equations (2) to (4).

$$x_i = \cos\theta_i\cos\phi_i \quad \dots (2)$$

$$y_i = \cos\theta_i\sin\phi_i \quad \dots (3)$$

$$z_i = \sin\theta_i \quad \dots (4)$$

Next, an arrival direction movement amount Len(i) of arrival direction data of the sound is calculated. The arrival direction movement amount Len(i) can be represented by the following equation (5).

$$Len(i)=\sqrt{(x(i)-x(i-1))^2+(y(i)-y(i-1))^2+(z(i)-z(i-1))^2}\quad \cdot\ \cdot\ \cdot\ (5)$$

i: index of environmental vector data

x(i), y(i), z(i): vector data projected on a unit sphere surface

[Angle of Direction Standard Deviation]

The angle of direction standard deviation which is the second characteristic amount is calculated every second from within a time range of angle of direction standard deviation calculation time wts.

Specifically, from an angle of direction in the range from time (i - wts) to time (i + wts), the angle of direction standard deviation at time $t_i$ is calculated. For the beginning and the end of the processing target section, since a section of a constant time cannot be secured, the angle of direction standard deviation is calculated only from respective obtained values.

[Elevation angle Standard Deviation]

The elevation angle standard deviation which is the third characteristic amount is calculated every second from within a time range of the elevation angle standard deviation calculation time wts.

Specifically, from an elevation angle in the range from time (i - wts) to time (i + wts), the elevation angle standard deviation at time $t_i$ is calculated. For the beginning and the end of the processing target section, since a section of a constant time cannot be secured, the elevation angle standard deviation is calculated only from respective obtained values.

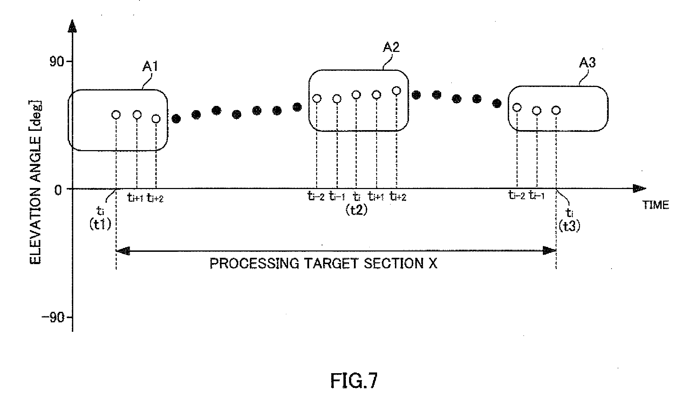

Fig. 7 is a diagram explaining a calculation range of a standard deviation. Note that an example of calculating the elevation angle standard deviation is illustrated in this diagram.

For example, the range from time t1 to time t3 is defined as a processing target section X. Then, the case where the calculation time (set time) for the standard deviation is set to "two seconds" is assumed.

In this case, in the area A1 which is the beginning area of the processing target section X, the standard deviation based on three pieces of data "time $t_i$", "time $t_{i+1}$", and "time $t_{i+2}$" is calculated. Note that the "time $t_{i+1}$" means the time which is one second after the time t1 (time $t_i$), and the "time $t_{i+2}$" means the time which is two seconds after the time t1.

Similarly, in the area A3 which is the end area of the processing target section X, the standard deviation based on three pieces of data, "time $t_i$", "time $t_{i-1}$", and "time $t_{i-2}$", is calculated. Note that the "time $t_{i-1}$" means the time which is one second before the time t3 (time $t_i$), and the "time $t_{i-2}$" means the time which is two seconds before the time t3.

On the other hand, in the area A2 which is an intermediate area of the processing target section X, the standard deviation based on five pieces of data, "time $t_{i-2}$", "time $t_{i-1}$", "time $t_i$", "time $t_{i+1}$", and "time $t_{i+2}$", is calculated. Note that the "time $t_{i+1}$" means the time which is one second after the time t2 (time $t_i$), and the "time $t_{i+2}$" means the time which is two seconds after the time t2. Further, the "time $t_{i-1}$" means the time which is one second before the time t2, and the "time $t_{i-2}$" means the time which is two seconds before the time t2.

[Details of the Characteristic Amount Smoothing Processing]

The characteristic amount smoothing processing (see step S300 in Fig. 5) is for suppressing the influence of acoustic disturbance and the influence when an SN ratio (obtained by dividing the amount of main noise by the amount of noise) is not good (when the sound of the discrimination target is not large enough relative to the background noise).

Specifically, the moving average value of the width of smoothing time (set range 0 to 60 seconds) is calculated from the beginning to the end of the processing target range for each of the three characteristic amounts.

[Details of the Candidate Point Extraction Processing]

The candidate point extraction processing (see step S400 in Fig. 5) is to extract from fluctuation of the characteristic amounts a candidate point for a time at which the sound source switches. The candidate for the change point of sound source is generated from three pieces of information, the arrival direction movement amount, the angle of direction, and the elevation angle, and the candidate point is extracted based on the following conditions.

(1) The arrival direction movement amount is larger than the arrival direction movement amount maximum value lower limit set in advance (set range of 0.00 to 2.00), and the time at which this value is a maximum value is taken as the candidate for the change point.

(2) The angle of direction standard deviation is larger than the angle of direction maximum value lower limit set in advance (set range of 0 to 180 degrees), and the time at which this value is a maximum value is taken as the candidate for the change point.

(3) The elevation angle standard deviation is larger than the elevation angle maximum value lower limit set in advance (set range of 0 to 180 degrees), and the time at which this value is a maximum value is taken as the candidate for the change point.

Note that the start time and the end time of the processing target range and the single event noise (single event noise and valid semi-single event noise) are "sound source change points", and thus they are not taken as the candidate point.

When the standard deviation $Stdev_i$ satisfies the following expressions (6) and (7), these maximum values can be obtained at time $t_i$.

$$Stdev_i - Stdev_{i-1} \geq 0 \quad ... (6)$$

$$Stdev_{i+1} - Stdev_i < 0 \quad ... (7)$$

[Details of the First Candidate Point Exclusion Processing]

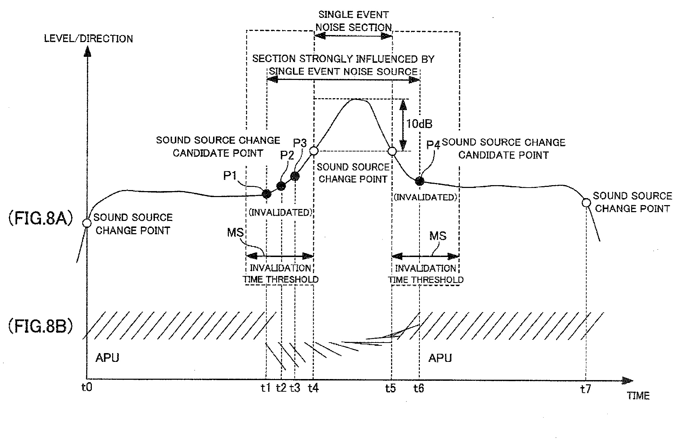

Fig. 8A and Fig. 8B are diagrams schematically illustrating the contents of the first candidate point exclusion processing.

The first candidate point exclusion processing (see step S500 in Fig. 5) is processing to invalidate candidate points located before and after the single noise event, so as to prevent excessive increase of the semi-stationary noise data.

As illustrated in Fig. 8A, the sound source change point is monitored at time t0. In fact, operation of the APU is started from time t0, and the operation of the APU is continued until time t7.

Then, the single event noise starts in the vicinity of time t1, and three sound source change candidate points P1 to P3 are extracted at time t1 to t3.

The section from time t4 to time t5 is the section of the single event noise, and a candidate point P4 of sound source change is extracted again at time t6.

In this case, the candidate points P1 to P4 are candidates in a section which is strongly influenced by the single event noise, and thus are not handled as candidate points (invalidated). Specifically, processing is performed such that when candidate points exist in the range of invalidation time threshold MS from the start time t4 and the end time t5 of the single event noise, these candidate points are invalidated uniformly.

As illustrated in Fig. 8B, from time t0 to time t1, the arrival direction of sound accompanying the operation of the APU is uniform, but when the single event noise occurs, the arrival direction of sound accompanying the operation of the APU is influenced by the single event noise and changes in direction (time t1 to time t6). Then, after a certain time passes after the single event noise (at time t6 and thereafter), the arrival direction of sound accompanying the operation of the APU returns to the uniform direction again.

[Details of the Second Candidate Point Exclusion Processing]

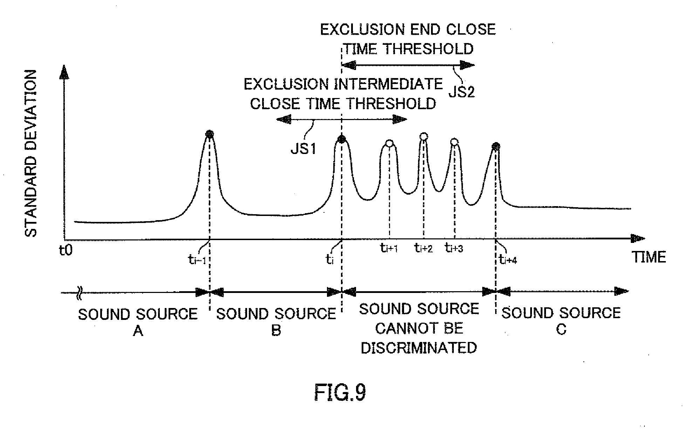

Fig. 9 is a diagram schematically illustrating the contents of the second candidate point exclusion processing.

The second candidate point exclusion processing (see S600 in Fig. 5) is to exclude candidate points which are temporally too close (excessively close candidate points) so as to prevent excessive increase of the semi-stationary noise data.

For example, when the three candidate points are located sequentially as "time $t_{i-1}$", "time $t_i$", "time $t_{i+1}$", the candidate point at time ti is invalidated when it satisfies the following relation.

$$(1) \ (time \ t_i - time \ t_{i-1}) < exclusion \ intermediate \ close \ time \ threshold \ JS1$$

$$(2)\ (\text{time } t_{i+1} - \text{time } t_i) < \text{exclusion intermediate close time threshold } JS1$$

Then, from among candidate points which remained without being invalidated by the above conditions, a candidate point on the rear side (with larger i) among adjacent candidate points less than or equal to an exclusion end close time threshold JS2 is further excluded. However, when the candidate point on the rear side is the start point of the single event noise (single event noise and valid semi-single event noise), a candidate point on the front side is excluded.

As illustrated in Fig. 9, a sound source A has occurred before time t0 and a sound source B occurs from time $t_{i-1}$, and thus the time $t_{i-1}$ becomes one of the candidate points of sound source change.

Then, when the exclusion intermediate close time threshold JS1 is set on both sides with the candidate point of time $t_i$ being the center, the candidate point at time $t_{i+1}$ is included in the range of the exclusion intermediate close time threshold JS1, and thus the candidate point at time $t_{i+1}$ is excluded first. Then, when the exclusion end close time threshold JS2 is set on a rear side seen on the temporal axis with the candidate point at time $t_i$ being the origin, the candidate point at time $t_{i+2}$ and the candidate point at time $t_{i+3}$ are included in the range of the exclusion end close time threshold JS2, and thus the candidate point at time $t_{i+2}$ and the candidate point at time $t_{i+3}$ are excluded.

As a result, from the five candidate points at time $t_i$ to time $t_{i+4}$, the three candidate points in the middle (white colored circles in the diagram) are excluded from the candidate points.

[Details of the Section Determination Processing of Semi-Stationary Noise]

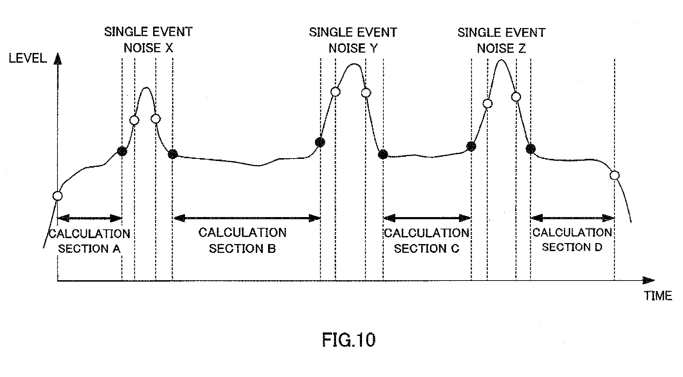

Fig. 10 to Fig. 13 are diagrams schematically illustrating the contents of the section determination processing of a semi-stationary noise. Among them, Fig. 10 is a diagram explaining a calculation section for the semi-stationary noise with a single event noise being sandwiched therebetween.

When plural single event noises X, Y, Z are included in the processing range, the correlation of calculation sections on both sides is taken from a histogram (graph illustrating the arrival direction of sound and the incoming frequency of sound) of angle of direction in the calculation section on both sides of the target single event noise section. Note that together with the histogram of angle of direction, the correlation of each of the calculation sections on both sides may be taken from a histogram of elevation angle.

In a coupling comparison of a single event noise X, the correlation is taken between a calculation section A and a calculation section B. Note that when events of the calculation section A and the calculation section B are determined to be the same and the calculation section A and the calculation section B are coupled, in a coupling comparison of a single event noise Y, the correlation is taken between the calculation section B and a calculation section C. Similarly, in a coupling comparison of a single event noise Z, the correlation is taken between the calculation section C and a calculation section D.

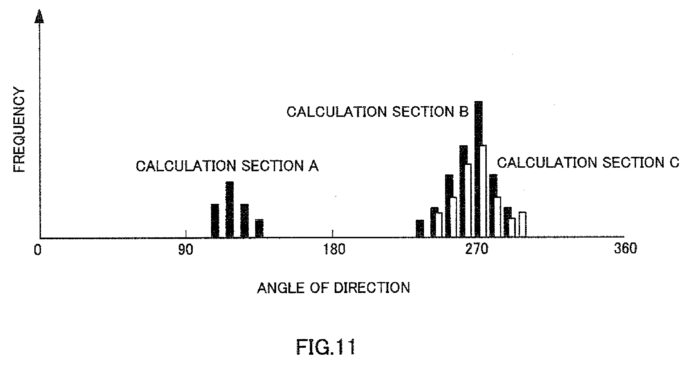

Fig. 11 is a diagram illustrating an example of the histogram of the angle of direction. Note that the histogram of elevation angle is generated as necessary. Note that the calculation section D is omitted from illustration.

The calculation section A increases in frequency when the angle of direction is of about 100 degrees to about 140 degrees.

The calculation sections B, C increase in frequency when the angle of direction is of about 230 degrees to about 300 degrees.

Accordingly, the calculation section A and the calculation section B do not become coupling targets. That is, they are determined to be semi-stationary noises of different types. On the other hand, the calculation section B and the calculation section C become coupling targets. That is, they are determined to be semi-stationary noises of the same sound source. Accordingly, even when the single event noise is sandwiched between the calculation section B and the calculation section C, the calculation section B and the calculation section C can be determined as the semi-stationary noise of the same sound source: Then, the calculation section B and the calculation section C are coupled as the semi-stationary noise from the same sound source.

Thus, when the single event noise is sandwiched between adjacent calculation sections, if the correlation of the calculation sections of the both sides sandwiching the single event noise satisfies a certain criterion, these adjacent calculation sections are determined as the semi-stationary noise from the same sound source. Note that when the single event noise is not sandwiched between the adjacent candidate points, if the correlation of the adjacent candidate points satisfy a certain criterion, the section coupling the adjacent candidate points are determined to be the section of the semi-stationary noise from the same sound source.

[Details of the Section Determination Processing of Semi-Stationary Noise]

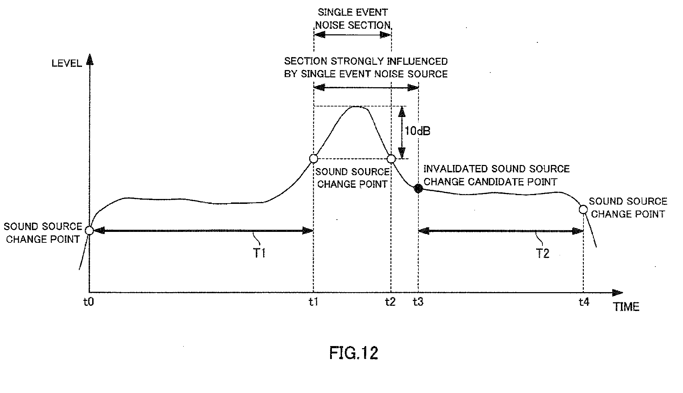

Fig. 12 is a diagram schematically illustrating the specific processing contents of the section determination processing of a semi-stationary noise.

This processing is processing (coupling processing) of determining the semi-stationary noise, and processing of determining the semi-stationary noise section from candidate points of sound source change (see step S700 in Fig. 5).

When candidate points does not sandwich the single event noise, the section between the candidate points of these two points (adjacent two points) is determined to be a semi-stationary noise section.

When candidate points sandwich the single event noise, the semi-stationary noise sections sandwiching the single event noise event are compared as described above. Then, when a cross-correlation value C of the histogram of angle of direction is equal to or more than a vector correlation threshold, the candidate points are coupled as the semi-stationary noise from the same sound source. The cross-correlation value C can be represented by the following equation (8).

$$ C = \frac{\sum_{k=1}^{72}(n_k - \widetilde{n})(m_k - \widetilde{m})}{\sqrt{\sum_{k=1}^{72}(n_k - \widetilde{n})^2}\sqrt{\sum_{k=1}^{72}(m_k - \widetilde{m})^2}} \qquad \cdots (8) $$

$$ \widetilde{m} = \frac{\sum_{k=1}^{72} m_k}{72} $$

$k$ : angle of direction index in five-degree steps

$n_k$ : frequency of angle index $k$ in the semi-stationary noise section on a front side of single event noise

$m_k$ : frequency of angle index $k$ in the semi-stationary noise section on a rear side of single event noise

$\widetilde{n},\widetilde{m}$ : additive averages of $n_k$, $m_k$, respectively

Here, when there is a candidate point invalidated in the previous candidate point exclusion processing (see step S500 and step S600 in Fig. 5), the histogram is calculated only in the outside section seen from the single event noise. That is, as illustrated in Fig. 12, there is an invalidated candidate point at time t3 in the section from time t2 to time t4, and thus the histogram is calculated in section T2 from time t3 to time t4.

On the other hand, when there is no invalidated candidate point, the histogram is calculated in this entire section. That is, as illustrated in Fig. 12, there is no invalidated candidate point in the section T1 from time t0 to time t1, and thus the histogram is calculated in the entire section from time t0 to time t1.

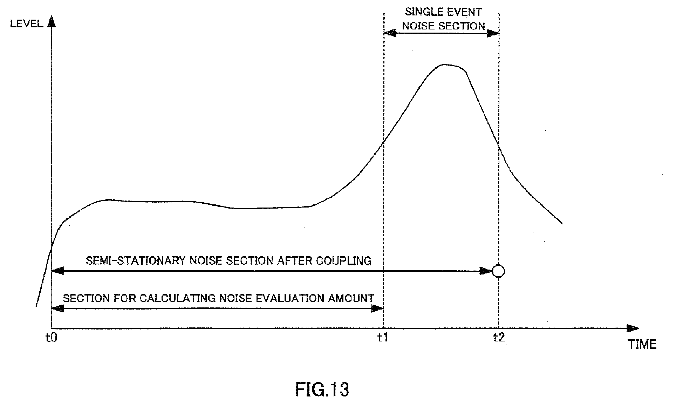

Fig. 13 is a diagram schematically illustrating the contents of exception handling of the section determination processing of the semi-stationary noise.

Regarding the single event noise and the semi-stationary noise, the end point of the semi-stationary noise and the start point of the single event noise can be at the same time (time t2) in rare cases.

In this case, regarding the end time of the semi-stationary noise, even when the correlation with the rear-side (subsequent) semi-stationary noise section cannot be calculated, the end time t2 of the single event noise is assumed as the end time of the semi-stationary noise.

[Actual Measurement Data]

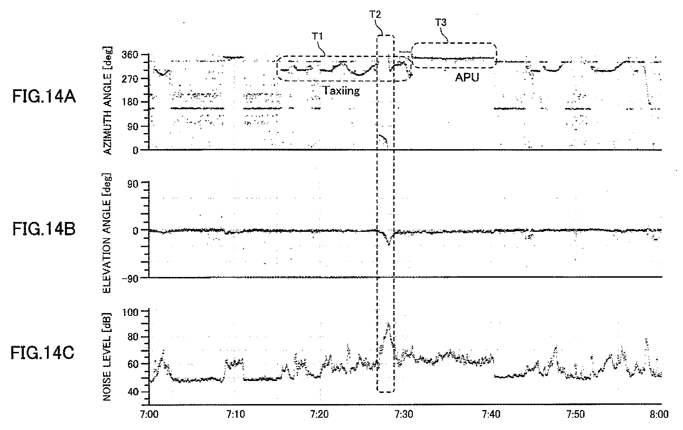

Figs. 14 (Fig. 14A, Fig. 14B, and Fig. 14C) are diagrams illustrating various data at a ground noise monitoring site, which are measured in the periphery of an airport. In these diagrams, the arrival direction of sound and fluctuation of A-weighted sound pressure level are illustrated by temporal history for one hour. Note that Fig. 14A illustrates an angle of direction, Fig. 14B illustrates an elevation angle, and Fig. 14C illustrates an equivalent continuous A-weighted sound pressure level per second.

A taxiing noise, an engine test noise, or the like (semi-stationary noise in region T1, T3) which is a gentle noise phenomenon ranging from several minutes to several tens of minutes overlaps with a short noise phenomenon such as a take-off noise or landing noise (single event noise in a region T2) in some cases. Accordingly, as illustrated in Fig.

14C, it only appears to be a background noise in a fluctuation diagram of A-weighted sound pressure level. Further, when a single event noise portion illustrated by the region T2 in the diagram is excluded, it can only be seen that the A-weighted sound pressure level in another portion occurs while changing in some vague way in each sound source, and discrimination by type is difficult.

In the illustrated example, a take-off noise of an aircraft occurs in the region T2 in the diagram, a taxiing noise occurs in the region T1 before and after the region T2, and an operating sound of the auxiliary power unit (APU) occurs after the taxiing noise. However, it is difficult to extract only the taxiing noise or the operating noise of the auxiliary power unit (APU) from data of Fig. 14C.

As illustrated in Fig. 14B, all the elevation angle data in measurement of ground noise are of sound from a horizontal direction, and there are hardly any characteristics other than takeoff and landing. On the other hand, as illustrated in Fig. 14A, the angle of direction data are of data heard from various directions in a horizontal plane, and thus characteristics appear according to the location of a sound source from an aircraft which is moving or stopped. Then, in this embodiment, changes of this angle of direction data are utilized for automatically performing separation of sound sources.

[Actual Measurement Data]

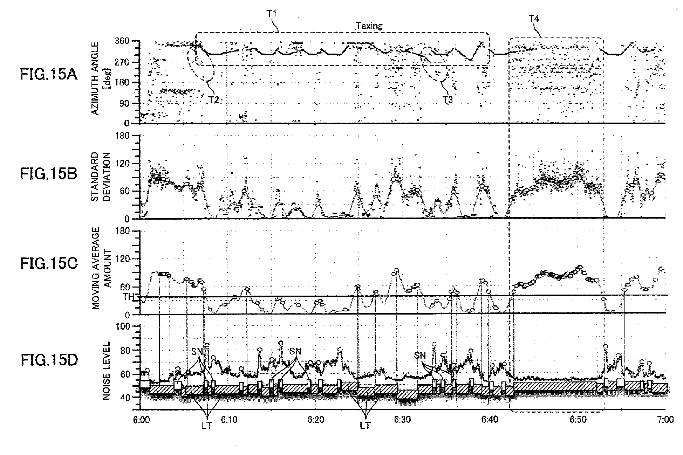

Figs. 15 (Fig. 15A, Fig. 15B, Fig. 15C, and Fig. 15D) are diagrams illustrating an example of fluctuation of semi-stationary noise level and characteristic amounts obtained by performing separation processing. Here, Fig. 15A illustrates an angle of direction, and Fig. 15B illustrates a short time movement standard deviation of the angle of direction. Further, Fig. 15C illustrates a moving average time of a smoothed short section standard deviation of the angle of direction, and Fig. 15D illustrates an equivalent continuous A-weighted sound pressure level of one second.

Note that in these diagrams, a data example regarding the angle of direction is illustrated, but data regarding an elevation angle are calculated similarly. Further, in this diagram, an amount for one hour within one detected as a long semi-stationary noise (taxiing) is illustrated. The semi-stationary noise (taxiing) occurs in the region T1 in the diagrams.

In Fig. 15A, angle of direction components per second of arrival direction data of sound are plotted. Assuming that the north of the angle of direction is 0 degree, the east is 90 degrees, the south is 180 degrees, and the west is 270 degrees, values up to 360 degrees are taken. A portion in which a curve rapidly drops between about 300 degrees and 170 degrees is a sound source of taking off (regions T2, T3 in the diagrams), and substantially matches the maximum value of the equivalent continuous A-weighted sound pressure level illustrated in Fig. 15D.

As illustrated in Fig. 15A, a portion in which a gentle curve is drawn between about 330 degrees and 360 degrees is sound source movement by taxiing.

From around 6:43 to around 6:53, there are continuing sections, in which the equivalent continuous A-weighted sound pressure level is small, and which are illustrated in Fig. 15D (region T4 in the diagrams), and the main sound source is not clear. Accordingly, as illustrated in Fig. 15A, it can be seen that noises come from various directions.

In Fig. 15B, to recognize a temporal change of the value of the angle of direction, the short time movement standard deviation of the value of the angle of direction is calculated and plotted. When this value is small, it means that changes of sound arrival direction data are small, and thus it represents that the generated sound source moves slowly or is stopped. When this value is large, it represents a situation that the dominant sound source replaces a sound source existing in a different location.

In Fig. 15C, the plots of Fig. 15B are smoothed, and moving average temporal histories of the short section standard deviation of the angle of direction are coupled with a curve. Information desired to be obtained here is an event (semi-stationary noise) having a relatively long time (for example, three minutes or more), such as taxiing, and thus the short section standard deviation is smoothed by performing moving average thereon with a time width of 30 seconds to 60 seconds. Thus, the maximum value roughly represents the time at which the sound source switched. Note that the smaller this value, the smaller the angle of direction temporal change of the sound source it represents.

For the maximum value to be the candidate at which the sound source changes, only a maximum value equal to or more than a constant threshold (TH) is taken as the candidate point at which the sound source changes, and a small maximum value is excluded.

Further, for example, in the time between about 6:43 and about 6:53, maximum values are very close and the main sound source is not clear, and thus temporal changes in arrival directions of sounds are large. To combine such sections where the main sound source is not clear into one, among maximum values which are close by a threshold or more on the temporal axis, values between the maximum values are invalidated and the both ends thereof are taken as effective candidate points of sound source change.

Note that a semi-stationary noise and a single event noise often overlap under the actual environment, and thus for the semi-stationary noise overlapping with the single event noise, the start and end times of the single event noise are cut out and calculated (outputted).

Then, in Fig. 15D, a temporal history of the equivalent continuous A-weighted sound pressure level is illustrated by a curve, and each apex part (white circle in the diagram) of the curve indicates a maximum noise level (LASmax) of the single event noise. In this case, most of them are sounds of taking off of an aircraft. On the other hand, the position fluctuating in the range of 60 dB to 70 dB is an increase of A-weighted sound pressure level by taxiing. Therefore, band-shaped data (SN) having no pattern illustrated in Fig. 15D are removed as a single event noise, and band-shaped data (LT) with a hatching pattern are coupled as a semi-stationary noise, thereby allowing determination of a semi-stationary noise. However, the semi-stationary noise is such that ones of the same noise sources are coupled based on the histogram of angle of direction, or the like.

Thus, according to this embodiment, there are following effects.

(1) The three characteristic amounts (arrival direction movement amount, elevation angle standard deviation, and angle of direction standard deviation) are used to extract the candidate point which is a time point at which the sound source of noise changes, and whether or not it is a semi-stationary noise from the same sound source based on a histogram of angle of direction or the like is determined. Thus, plural semi-stationary noises which are temporally sequential can be discriminated accurately and quickly. In this point, the histogram of angle of direction allows to identify information coming from various directions on a horizontal plane and hence is most suitable information for cutting out and separating semi-stationary noises, allowing to improve reliability of determination of semi-stationary noises.

(2) The characteristic amount indicating a change in arrival direction of sound in synchronization with fluctuation of an A-weighted sound pressure level is calculated, and a sound source boundary is extracted automatically from a long semi-stationary noise for several hours. Thus, the detected noise can be divided into semi-stationary noises by sound source.

The present invention is not limited to the above-described embodiments, and can be modified and implemented in various ways. In one embodiment, an airport is the target area, but the monitoring apparatus and the monitoring method of the present invention can be used for any target area of monitoring other than airports. When the direction of an incoming noise and the characteristic of duration are known, it is possible to monitor with one apparatus by discriminating noises occurring from, for example, a train passing through a predetermined section of a railroad, an automobile passing through a predetermined section of an expressway, a factory, a construction site, and the like.

Further, the condition (background noise level ± 10 dB), threshold, and so on related to detection of noise event described in one embodiment are examples, and setting of the condition can be changed appropriately according to the target area of monitoring and characteristics of the sound source.

## Claims

1.  A noise monitoring apparatus (100) adapted to determine time points when there is at least one source change in a monitoring environment where at least one single event noise and at least one semi-stationary noise occur, **characterized in that** it comprises:

a microphone unit (10) adapted to sense noise in the monitoring environment in a predetermined time range;
a detecting means (102, S100) adapted to detect and discriminate at least a single event noise and a semi-stationary noise in the noise sensed by the microphone unit in the predetermined time range, each detected noise occurring during a detected time section;
a characteristic amount calculating means (106, 8200) adapted to calculate, per unit time, as a characteristic amount indicating a change in an arrival direction of each of the noises detected by the detecting means in the predetermined time range, a value of at least one of

o an arrival direction movement amount indicating a change amount in the arrival direction of the noise,
o a standard deviation of an elevation angle of the noise, from a horizontal plane set in the monitoring environment, and
o a standard deviation of an angle of direction of the noise, relative to a reference azimuth set in the monitoring environment;

a smoothing means (106, S300) adapted to smooth the characteristic amount having plural values in the predetermined time range and calculated by the characteristic amount calculating means;
an extracting means (106, 8400) adapted to extract at least one candidate point, said candidate point being a time point when a fluctuation of the characteristic amount smoothed by the smoothing means is detected outside the time sections of single event noises detected by the detecting means; and

an excluding means (106, 8500, 8600) adapted to exclude from among candidate points extracted by the extracting means, any candidate point existing (8500) in a predetermined first time interval prior and posterior to a time section of a single event noise and any candidate point existing (8600) in a predetermined second time interval prior and posterior to another candidate point.

2. The noise monitoring apparatus according to claim 1, **characterized in that** it further comprises:

a determining means (106, S700) adapted to determine, when a single event noise is sandwiched between time sections delimited by candidate points not excluded by the excluding means, that time sections on both sides of the single event noise are semi-stationary noises from a same sound source if a correlation of histograms of angles of direction of the time sections on the both sides sandwiching the single event noise satisfies a certain criterion.

3. A noise monitoring method for determining time points when there is at least one source change in a monitoring environment where at least one single event noise and at least one semi-stationary noise occur, **characterized in that** it comprises the steps of:

a sensing step of sensing noise in the monitoring environment in a predetermined time range;
a detecting step of detecting and discriminating at least a single event noise and a semi-stationary noise in the sensed noise in the predetermined time range, each detected noise occurring during a detected time section;
a characteristic amount calculating step of calculating, per unit time, as a characteristic amount indicating a change in an arrival direction of each of the noises detected by the detecting step in the predetermined time range, a value of at least one of

o an arrival direction movement amount indicating a change amount in the arrival direction of the noise,
o a standard deviation of an elevation angle of the noise, from a horizontal plane set in the monitoring environment, and
o a standard deviation of an angle of direction of the noise, relative to a reference azimuth set in the monitoring environment;

a smoothing step of smoothing the characteristic amount having plural values in the predetermined time range and calculated by the characteristic amount calculating step;
an extracting step of extracting at least one candidate point, said candidate point being a time point when a fluctuation of the characteristic amount smoothed by the smoothing step is detected outside the time sections of single event noises detected by the detecting step;
an excluding step of excluding from among candidate points extracted by the extracting step, any candidate point existing in a first time interval prior and posterior to a time section of a single event noise and any candidate point existing in a predetermined second time interval prior and posterior to another candidate point.

4. The noise monitoring method according to claim 3, **characterized in that** it further comprises:

a determining step of determining, when a single event noise is sandwiched between time sections delimited by candidate points not excluded by the excluding step, that time sections on both sides of the single event noise are semi-stationary noise from a same sound source if a correlation of histograms of angles of direction of the time sections on the both sides sandwiching the single event noise satisfies a certain criterion.

**Patentansprüche**

1. Lärmüberwachungsvorrichtung (100), die dafür ausgelegt ist, Zeitpunkte zu bestimmen, an denen mindestens eine Quellenänderung in einer Überwachungsumgebung stattfindet, wo mindestens ein Lärm eines einzelnen Ereignisses und mindestens ein halbstationärer Lärm auftreten, **dadurch gekennzeichnet, dass** sie Folgendes umfasst:

eine Mikrofoneinheit (10), die dafür ausgelegt ist, Lärm in der Überwachungsumgebung in einem zuvor festgelegten Zeitbereich festzustellen;
ein Detektionsmittel (102, S100), das dafür ausgelegt ist, mindestens Lärm eines einzelnen Ereignisses und einen halbstationären Lärm in dem Lärm, der durch die Mikrofoneinheit in dem zuvor festgelegten Zeitbereich festgestellt wurde, zu detektieren und zu unterscheiden, wobei jeder detektierte Lärm während eines detektierten Zeitabschnitts auftritt;
ein Mittel zum Berechnen eines charakteristischen Betrags (106, 8200), das dafür ausgelegt ist, einen Wert

- eines Ankunftsrichtungsbewegungsbetrages, der einen Änderungsbetrag der Ankunftsrichtung des Lärms angibt, und/oder
- einer Standardabweichung eines Höhenwinkels des Lärms von einer in der Überwachungsumgebung angeordneten horizontalen Ebene, und/oder
- einer Standardabweichung eines Winkels der Richtung des Lärms relativ zu einem in der Überwachungsumgebung angeordneten Referenzazimut

als einen charakteristischen Betrag, der eine Änderung einer Ankunftsrichtung eines jeden der Lärmereignisse, die durch das Detektionsmittel in dem zuvor festgelegten Zeitbereich detektiert wurden, angibt, je Zeiteinheit zu berechnen;
ein Glättungsmittel (106, S300), das dafür ausgelegt ist, den charakteristischen Betrag zu glätten, der mehrere Werte in dem zuvor festgelegten Zeitbereich hat und durch das Mittel zum Berechnen des charakteristischen Betrags berechnet wurde;
ein Extraktionsmittel (106, 8400), das dafür ausgelegt ist, mindestens einen Kandidatenpunkt zu extrahieren, wobei der Kandidatenpunkt ein Zeitpunkt ist, an dem eine Schwankung des durch das Glättungsmittel geglätteten charakteristischen Betrages außerhalb der Zeitabschnitte des durch das Detektionsmittel detektierten Lärms einzelner Ereignisse detektiert wird; und
ein Ausschlussmittel (106, 8500, 8600), das dafür ausgelegt ist, aus den durch das Extraktionsmittel extrahierten Kandidatenpunkten alle Kandidatenpunkte auszuschließen, die in einem zuvor festgelegten ersten Zeitintervall vor und nach einem Zeitabschnitt des Lärms eines einzelnen Ereignisses existieren (8500), sowie alle Kandidatenpunkt auszuschließen, die in einem zuvor festgelegten zweiten Zeitintervall vor und nach einem anderen Kandidatenpunkt existieren (8600).

2. Lärmüberwachungsvorrichtung nach Anspruch 1, **dadurch gekennzeichnet, dass** sie des Weiteren Folgendes umfasst:

ein Bestimmungsmittel (106, S700), das dafür ausgelegt ist, wenn der Lärm eines einzelnen Ereignisses zwischen Zeitabschnitten eingeschlossen ist, die durch Kandidatenpunkte begrenzt werden, die nicht durch das Ausschlussmittel ausgeschlossen wurden, zu bestimmen, dass Zeitabschnitte auf beiden Seiten des Lärms eines einzelnen Ereignisses halbstationäre Lärmereignisse von ein und derselben Schallquelle sind, wenn eine Korrelation von Histogrammen von Richtungswinkeln der Zeitabschnitte auf den beiden Seiten, die den Lärm eines einzelnen Ereignisses einschließen, ein bestimmtes Kriterium erfüllen.

3. Lärmüberwachungsverfahren zum Bestimmen von Zeitpunkten, an denen mindestens eine Quellenänderung in einer Überwachungsumgebung stattfindet, wo mindestens ein Lärm eines einzelnen Ereignisses und mindestens ein halbstationärer Lärm auftreten, **dadurch gekennzeichnet, dass** es folgende Schritte umfasst:

einen Feststellungsschritt zum Feststellen von Lärm in der Überwachungsumgebung in einem zuvor festgelegten Zeitbereich;
einen Detektionsschritt zum Detektieren und Unterscheiden von mindestens Lärm eines einzelnen Ereignisses und einen halbstationären Lärm in dem Lärm, der in dem zuvor festgelegten Zeitbereich festgestellt wurde, wobei jeder detektierte Lärm während eines detektierten Zeitabschnitts auftritt
einen Schritt zum Berechnen eines charakteristischen Betrags zum Berechnen, je Zeiteinheit, eines Wertes

- eines Ankunftsrichtungsbewegungsbetrages, der einen Änderungsbetrag der Ankunftsrichtung des Lärms angibt, und/oder
- einer Standardabweichung eines Höhenwinkels des Lärms von einer in der Überwachungsumgebung angeordneten horizontalen Ebene, und/oder
- einer Standardabweichung eines Winkels der Richtung des Lärms relativ zu einem in der Überwachungsumgebung angeordneten Referenzazimut

als einen charakteristischen Betrag, der eine Änderung einer Ankunftsrichtung eines jeden der Lärmereignisse, die durch das Detektionsmittel in dem zuvor festgelegten Zeitbereich detektiert wurden, angibt;
einen Glättungsschritt zum Glätten des charakteristischen Betrages, der mehrere Werte in dem zuvor festgelegten Zeitbereich hat und durch den Schritt zum Berechnen des charakteristischen Betrags berechnet wurde; einen Extraktionsschritt zum Extrahieren mindestens eines Kandidatenpunktes, wobei der Kandidatenpunkt ein Zeitpunkt ist, an dem eine Schwankung des durch das Glättungsmittel geglätteten charakteristischen Betrages außerhalb der Zeitabschnitte des durch das Detektionsmittel detektierten Lärms einzelner Ereignisse detektiert wird; einen Ausschließungsschritt zum Ausschließen, aus den durch den Extraktionsschritt extrahierten Kandidatenpunkten, aller Kandidatenpunkte, die in einem ersten Zeitintervall vor und nach einem Zeitabschnitt des Lärms eines einzelnen Ereignisses existieren, sowie aller Kandidatenpunkte, die in einem zuvor festgelegten zweiten Zeitintervall vor und nach einem anderen Kandidatenpunkt existieren.

4.  Lärmüberwachungsverfahren nach Anspruch 3, **dadurch gekennzeichnet, dass** es des Weiteren Folgendes umfasst:

einen Bestimmungsschritt zum Bestimmen, wenn der Lärm eines einzelnen Ereignisses zwischen Zeitabschnitten eingeschlossen ist, die durch Kandidatenpunkte begrenzt werden, die nicht durch den Ausschließungsschritt ausgeschlossen wurden, dass Zeitabschnitte auf beiden Seiten des Lärms eines einzelnen Ereignisses halbstationäre Lärmereignisse von ein und derselben Schallquelle sind, wenn eine Korrelation von Histogrammen von Richtungswinkeln der Zeitabschnitte auf den beiden Seiten, die den Lärm eines einzelnen Ereignisses einschließen, ein bestimmtes Kriterium erfüllen.

## Revendications

1.  Appareil de surveillance de bruit (100) conçu pour déterminer des points temporels quand il y a au moins un changement de source dans un environnement de surveillance où au moins un bruit d'événement unique et au moins un bruit semi-stationnaire se produisent, **caractérisé en ce qu'**il comprend :

une unité de microphone (10) conçue pour détecter le bruit dans l'environnement de surveillance dans une plage de temps prédéterminée;
un moyen de détection (102, S100) conçu pour détecter et discriminer au moins un bruit d'événement unique et un bruit semi-stationnaire dans le bruit détecté par l'unité de microphone dans la plage de temps prédéterminée, chaque bruit détecté se produisant pendant une section temporelle détectée;
un moyen de calcul de quantité caractéristique (106, 8200) conçu pour calculer, par unité de temps, en tant que quantité caractéristique indiquant un changement d'une direction d'arrivée de chacun des bruits détectés par le moyen de détection dans la plage de temps prédéterminée, une valeur d'au moins l'un parmi

- une quantité de mouvement de direction d'arrivée indiquant une quantité de changement dans la direction d'arrivée du bruit,
- un écart-type d'un angle d'élévation du bruit, à partir d'un plan horizontal défini dans l'environnement de surveillance, et
- un écart-type d'un angle de direction du bruit, par rapport à un azimut de référence défini dans l'environnement de surveillance;

un moyen de lissage (106, S300) conçu pour lisser la quantité caractéristique ayant plusieurs valeurs dans la plage de temps prédéterminée et calculée par le moyen de calcul de quantité caractéristique;
un moyen d'extraction (106, 8400) conçu pour extraire au moins un point candidat, ledit point candidat étant un point temporel quand une fluctuation de la quantité caractéristique lissée par le moyen de lissage est détectée en dehors des sections temporelles de bruits d'événements uniques détectés par le moyen de détection; et
un moyen d'exclusion (106, 8500, 8600) conçu pour exclure parmi les points candidats extraits par le moyen d'extraction, tout point candidat existant (8500) dans un premier intervalle temporel prédéterminé antérieur et postérieur à une section temporelle d'un événement de bruit unique, et tout point candidat existant (8600) dans un second intervalle temporel prédéterminé antérieur et postérieur à un autre point candidat.

2.  Appareil de surveillance de bruit selon la revendication 1, **caractérisé en ce qu'**il comprend en outre :

un moyen de détermination (106, S700) conçu pour déterminer, quand un bruit d'événement unique est pris en sandwich entre des sections temporelles délimitées par des points candidats non exclus par le moyen d'exclusion, que des sections temporelles des deux côtés du bruit d'événement unique sont des bruits semi-stationnaires provenant d'une même source sonore si une corrélation d'histogrammes d'angles de direction des sections temporelles des deux côtés prenant en sandwich le bruit d'événement unique satisfait un certain critère.

**3.** Procédé de surveillance de bruit pour déterminer des points temporels quand il y a au moins un changement de source dans un environnement de surveillance où au moins un bruit d'événement unique et au moins un bruit semi-stationnaire se produisent, **caractérisé en ce qu'**il comprend les étapes suivantes :

une étape de détection consistant à détecter le bruit dans l'environnement de surveillance dans une plage de temps prédéterminée;
une étape de détection consistant à détecter et à discriminer au moins un bruit d'événement unique et un bruit semi-stationnaire dans le bruit détecté dans la plage de temps prédéterminée, chaque bruit détecté se produisant pendant une section temporelle détectée;
une étape de calcul de quantité caractéristique consistant à calculer, par unité de temps, en tant que quantité caractéristique indiquant un changement d'une direction d'arrivée de chacun des bruits détectés par l'étape de détection dans la plage de temps prédéterminée, une valeur d'au moins l'un parmi

- une quantité de mouvement de direction d'arrivée indiquant une quantité de changement dans la direction d'arrivée du bruit,
- un écart-type d'un angle d'élévation du bruit, à partir d'un plan horizontal défini dans l'environnement de surveillance, et
- un écart-type d'un angle de direction du bruit, par rapport à un azimut de référence défini dans l'environnement de surveillance;

une étape de lissage consistant à lisser la quantité caractéristique ayant plusieurs valeurs dans la plage de temps prédéterminée et calculée par l'étape de calcul de quantité caractéristique;
une étape d'extraction consistant à extraire au moins un point candidat, ledit point candidat étant un point temporel quand une fluctuation de la quantité caractéristique lissée par l'étape de lissage est détectée en dehors des sections temporelles de bruits d'événements uniques détectés par l'étape de détection;
une étape d'exclusion consistant à exclure parmi les points candidats extraits par l'étape d'extraction, tout point candidat existant dans un premier intervalle temporel antérieur et postérieur à une section temporelle d'un bruit d'événement unique et tout point candidat existant dans un second intervalle temporel prédéterminé antérieur et postérieur à un autre point candidat.

**4.** Procédé de surveillance de bruit selon la revendication 3, **caractérisé en ce qu'**il comprend en outre :

une étape de détermination consistant à déterminer, lorsqu'un bruit d'événement unique est pris en sandwich entre des sections temporelles délimitées par des points candidats non exclus par l'étape d'exclusion, que des sections temporelles des deux côtés du bruit d'événement unique sont un bruit semi-stationnaire provenant d'une même source sonore si une corrélation d'histogrammes d'angles de direction des sections temporelles des deux côtés prenant en sandwich le bruit d'événement unique satisfait un certain critère.

EP 2 565 601 B1

FIG.1

20

FIG.2

FIG.3

FIG.4

START

NOISE DETECTION PROCESSING — S100

CHARACTERISTIC AMOUNT
CALCULATION PROCESSING — S200

CHARACTERISTIC AMOUNT
SMOOTHING PROCESSING — S300

CANDIDATE POINT EXTRACTION
PROCESSING — S400

CANDIDATE POINT EXCLUSION
PROCESSING (1) — S500

CANDIDATE POINT EXCLUSION
PROCESSING (2) — S600

SECTION DETERMINATION
PROCESSING OF
SEMI-STATIONARY NOISE — S700

END

FIG.5

FIG.6

FIG.7

(FIG.8A)

(FIG.8B)

FIG.9

FIG.10

FIG.11

FIG.12

FIG.13

FIG.14A

FIG.14B

FIG.14C

FIG.15A

FIG.15B

FIG.15C

FIG.15D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H743203 B